# EUROPÄISCHE PATENTSCHRIFT

(11) **EP 4 596 902 B1**
(45) Veröffentlichungstag und Bekanntmachung des Hinweises auf die Patenterteilung: **11.11.2026**
(21) Anmeldenummer: 25154808.7
(22) Anmeldetag: 29.01.2025
(51) Int. Cl.: F16B 13/12

(54) **VERFAHREN ZUR HERSTELLUNG EINER BEFESTIGUNGSANORDNUNG**
METHOD FOR PRODUCING A FASTENING ARRANGEMENT
PROCÉDÉ DE FABRICATION D'UN DISPOSITIF DE FIXATION

(30) Priorität: 04.02.2024 DE 102024103059; 08.07.2024 DE 102024119356; 09.08.2024 DE 102024122845; 07.01.2025 DE 102025100196
(43) Veröffentlichungstag der Anmeldung: 06.08.2025
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- DE-A1- 2 402 252
- DE-A1- 2 712 148
- DE-A1- 4 116 173
- GB-A- 2 118 660

## Beschreibung

Die Erfindung betrifft ein Verfahren zu Herstellung einer Befestigungsanordnung mit den Merkmalen des Oberbegriffs des Anspruchs 1.

Es ist bekannt, ein Anbauteil, beispielsweise eine Rahmenkonstruktion aus Holz oder eine Konsole aus Metall, mittels eines Spreizdübels und einer Spreizschraube an einem Verankerungsgrunds zu befestigen. Hierzu wird in den Verankerungsgrund ein Bohrloch gebohrt, der Spreizdübel in das Bohrloch eingebracht und durch Einbringen der Spreizschraube aufgespreizt. Bei einer sogenannten Vorsteckmontage wird der Spreizdübel vor dem Anbringen des Anbauteils in das Bohrloch eingebracht, während bei einer sogenannten Durchsteckmontage der Spreizdübel durch das Anbauteil hindurch in das Bohrloch gesteckt wird. Durch das nachfolgende Einschrauben der Spreizschraube in den Spreizdübel wird dieser im Bohrloch verspreizt und verankert und zudem das Anbauteil am Verankerungsgrund befestigt.

Aus dem Dokument Europäische Technische Bewertung ETA-07/0121 vom 20. Dezember 2022 des DIBt (Deutsches Institut für Bautechnik) ist ein Befestigungssystem bekannt, das den fischer Langschaftdübel SXRL und eine zugehörige Spreizschraube umfasst. Der fischer SXRL ist ein typischer Vertreter der sogenannten Langschaft- oder Rahmendübel, die für die Durchsteckmontage vorgesehen sind. Die Abbildung der Figur 1 ist dem Anhang A1 dieses Dokuments entnommen. Sie zeigt den Spreizdübel 1, der in Durchsteckmontage durch ein Anbauteil 3 hindurch in ein Bohrloch 5 eingebracht wurde. Der Spreizdübel 1 liegt mit einem bundförmigen Kragen 14, der am hinteren Ende des Spreizdübels 1 ausgebildet ist, auf einer Außenseite des Anbauteils 3 an. Durch das Einbringen einer Spreizschraube 2 wurde der Spreizdübel 1 im Bohrloch 5 aufgespreizt und verankert. Das Anbauteil 3 ist somit mittels des Spreizdübels 1 und der Spreizschraube 2 am Verankerungsgrund 4 befestigt. Es ist zu sehen, dass die Spreizschraube 2 mit ihrer, für Spreizschrauben typischen, konischen Schraubenspitze 22 in Einbringrichtung 6 nach vorne im Bohrloch 5 über den Spreizdübel 1 übersteht. Gemäß Tabelle A3.1 der ETA entspricht dieser Überstand dem Nenndurchmesser der Spreizschraube 2.

Dies ist erforderlich, damit der Spreizdübel 1 über die gesamte Länge seines Spreizbereichs 27 im Bohrloch 5 planmäßig aufspreizt, da nur dann gewährleistet ist, dass der sich an die Schraubenspitze 22 nach hinten anschließende zylindrische Teil des Schraubenschafts im Spreizbereich 27 des Spreizdübels 1 liegt und der Spreizbereich 27 planmäßig aufspreizt und mit ausreichend großer Kraft gegen die Bohrlochwand gedrückt wird. Damit die Spreizschraube 2 ausreichend weit in das Bohrloch 5 eingebracht werden kann, um den Spreizdübel 1 planmäßig aufzuspreizen, weist das Bohrloch 5 eine Mindestbohrlochtiefe 13 auf, also eine Tiefe, mit der das Bohrloch planmäßig minimal gebohrt werden muss, die größer als die Länge ist, mit der der Spreizdübel 1 planmäßig in das Bohrloch eingreift, um die gewünschte Haltekraft zu erreichen. Diese Länge wird Mindestsetztiefe 25 genannt. Die Mindestbohrlochtiefe 13 muss laut Tabelle B3.1 der ETA mindestens 10 Millimeter größer als die Mindestsetztiefe 25 des Spreizdübels 1 sein. Dadurch soll verhindert werden, dass das vordere Ende 7 der Spreizschraube 2 beim Eindrehen am Bohrlochgrund 9 ansteht.

Allerdings kann es in der Baupraxis vorkommen, dass ein Bohrloch versehentlich nicht ausreichend tief gebohrt wurde, also die Mindestbohrtiefe nicht erreicht ist. Ist die Tiefe dieses Bohrlochs größer als die planmäßige Setztiefe des Spreizdübels, kann zwar der Spreizdübel wie vorgesehen in das Bohrloch eingebracht werden. Beim Einschrauben der Spreizschraube stößt aber die Spreizschraube mit ihrem vorderen Ende am Bohrlochgrund an, sodass ein weiterer Vortrieb nicht mehr möglich ist. Dies führt zum einen dazu, dass der Spreizdübel nicht planmäßig aufspreizt. Zudem liegt der Kopf der Spreizschraube nicht am Anbauteil an, das Anbauteil ist somit nicht planmäßig am Verankerungsgrund befestigt. Zudem kann es vorkommen, dass der Schraubenkopf beim Eindrehen abreißt, wenn die Spreizschraube am Bohrlochgrund ansteht, und trotzdem versucht wird die Spreizschraube weiter einzudrehen, beispielsweise mit einem drehmomentstarken Akkuschrauber.

Aufgabe der Erfindung ist es daher, das aus dem Stand der Technik bekannte Befestigungssystem so zu verbessern, dass eine fehlerhafte Montage ausgeschlossen ist.

Diese Aufgabe wird erfindungsgemäß durch ein Verfahren gemäß Anspruch 1 gelöst. Die abhängigen Ansprüche beziehen sich auf bevorzugte Ausführungsformen der Erfindung.

Die erfindungsgemäße Befestigungsanordnung umfasst einen Spreizdübel, eine Spreizschraube, ein Anbauteil und einen Verankerungsgrund. Spreizdübel und Spreizschraube gehören insbesondere zu einem Befestigungssystem, für das bestimmte, in einem dem Befestigungssystem zugeordneten Zulassungsdokument, beispielsweise einer ETA, Anwendungen, Nenndurchmesser der Systemkomponenten und eines zugehörigen im Verankerungsgrund gebohrten Bohrlochs sowie jeweils mindestens eine Mindestbohrloch- und Mindestsetztiefe geregelt sind. Das Anbauteil der erfindungsgemäßen Befestigungsanordnung wird mittels des Spreizdübels und der Spreizschraube am Verankerungsgrund befestigt. Hierzu wird zunächst ein Bohrloch in dem Verankerungsgrund gebohrt, das sich, ausgehend von einer Außenseite des Verankerungsgrunds von einem Bohrlochmund als Sackloch bis zu einem Bohrlochgrund erstreckt. Der "Bohrlochgrund" bildet das in Einbringrichtung vordere Ende des Bohrlochs, in einem ideal zylindrischen Bohrloch ist der Bohrlochgrund die Grundfläche des Zylinders. Typischerweise weist ein in Beton oder Mauerwerk gebohrtes Bohrloch an seinem vorderen Ende allerdings einen kegelförmigen Abschnitt auf, der den Bohrlochgrund bildet. Die Bohrlochtiefe ist somit die Höhe des zylindrischen Teils des Bohrlochs. Die Höhe des Bohrlochgrunds entspricht der Höhe des Kegels.

Erfindungsgemäß weist das Bohrloch eine dem Spreizdübel zugeordnete planmäßige Mindestbohrlochtiefe derart, dass im verankerten Zustand das in Einbringrichtung vordere Ende des Spreizdübels einen Abstand zum Bohrlochgrund aufweist, der kleiner als die Hälfte, insbesondere kleiner als ein Drittel des Bohrlochdurchmessers ist. Das in Einbringrichtung vordere Ende der Spreizschraube weist einen Abstand zum Bohrlochgrund auf, der kleiner als der Bohrlochdurchmesser, insbesondere kleiner als die Hälfte des Bohrlochdurchmessers ist. Vereinfachend wird angenommen, dass der Bohrlochdurchmesser dem Bohrlochnenndurchmesser entspricht, also ein Bohrloch mit Nenndurchmesser 10 Millimeter für einen Spreizdübel mit Nenndurchmesser 10 Millimeter auch einen Durchmesser von 10 Millimeter aufweist. Erfindungsgemäß überragt der Spreizdübel die Spreizschraube in Einbringrichtung, insbesondere um eine Länge, die mindestens 10 %, insbesondere mindestens 25 % des Bohrlochdurchmessers entspricht. Hierdurch ist gewährleistet, dass, wenn der Spreizdübel bis zur gewünschten Setztiefe in das Bohrloch eingebracht werden kann, auch die Spreizschraube ausreichend weit in das Bohrloch eingeschraubt werden kann, ohne dass sie am Bohrlochgrund ansteht.

Der Spreizdübel wird in das Bohrloch eingebracht, insbesondere bis zu einer planmäßigen Mindestsetztiefe, und in dem Bohrloch mittels der Spreizschraube verspreizt. Der Spreizdübel ist dadurch im Verankerungsgrund planmäßig verankert. Insbesondere sind die Mindestbohrlochtiefe und die Mindestsetztiefe, und damit ein planmäßiger Verankerungszugstand, in einem dem Befestigungssystem zugeordneten Zulassungsdokument für den jeweiligen Verankerungsgrund geregelt, insbesondere in einer ETA.

Mit "Einbringrichtung" ist die Richtung gemeint, in die der Spreizdübel planmäßig in das Bohrloch eingebracht wird. Das in Einbringrichtung "vordere Ende" des Spreizdübels ist somit das Ende, dass beim Einbringen in das Bohrloch zuerst in das Bohrloch gelangt und im planmäßigen Verankerungszustand dem Bohrlochgrund am nächsten ist.

Vorzugsweise weist das Bohrloch eine dem Spreizdübel zugeordnete planmäßige Mindestbohrlochtiefe auf, die der Mindestsetztiefe des Spreizdübels im Bohrloch bei planmäßiger Montage entspricht. Das Bohrloch kann, muss aber nicht tiefer als die Mindestbohrlochtiefe gebohrt sein, um eine sichere Funktion des Spreizdübels zu gewährleisten. Es können auch einem Spreizdübel mehrere Mindestbohrlochtiefen zugeordnet sein, wenn dem Spreizdübel mehrere Mindestsetztiefen zugeordnet sind, wie dies beispielsweise aus der eingangs erwähnten ETA für den fischer SXRL bekannt ist. Für das Befestigungssystem der erfindungsgemäßen Befestigungsanordnung kann dies ebenfalls in einem zugeordneten Zulassungsdokument geregelt sein.

Vorzugsweise steht der Spreizdübel nach dem planmäßigen Einbringen in das Bohrloch, insbesondere wenn der Spreizdübel mit der gewünschten, planmäßigen Mindestsetztiefe in das Bohrloch eingebracht ist, am Bohrlochgrund an.

Ist das Bohrloch erfindungsgemäß zumindest mit einer Mindestbohrlochtiefe oder tiefer gebohrt, so kann der Spreizdübel erfindungsgemäß als Lehre zur Bestimmung einer ausreichenden Bohrlochtiefe verwendet werden. Hierzu wird der Spreizdübel so weit in das Bohrloch eingebracht, bis eine Setztiefenmarkierung am Spreizdübel anzeigt, dass der Spreizdübel zumindest über die gewünschte Mindestsetztiefe in das Bohrloch eingreift. Als Setztiefenmarkierung kann das hintere Ende des Spreizdübels, insbesondere ein das hintere Ende bildender Kragen dienen. Alternativ oder zusätzlich kann die Setztiefenmarkierung beispielsweise als umlaufende Ring am Umfang des Spreizdübels angeordnet sein. Auch können mehrere Setztiefenmarkierung vorhanden sein, falls der Spreizdübel geeignet ist, in verschiedenen Setztiefen, abhängig von den erforderlichen Haltewerten, dem Verankerungsgrund und/oder der Dicke des Anbauteils eingesetzt zu werden, wie dies aus der eingangs erwähnten ETA für den fischer SXRL bereits bekannt ist. Weist das Bohrloch die Mindestbohrlochtiefe auf, so steht der Spreizdübel, wenn er mit der planmäßigen und der der Mindestbohrlochtiefe zugeordneten Mindestsetztiefe in das Bohrloch eingreift, mit seinem in Einbringrichtung vorderen Ende am Bohrlochgrund an. Da das vordere Ende des Spreizdübels nach dem Erstellen der erfindungsgemäßen Befestigungsanordnung über das vordere Ende der Spreizschraube zum Bohrlochgrund hin übersteht, weiß ein Anwender, dass, wenn der Spreizdübel planmäßig in das Bohrloch eingebracht werden kann, der Spreizdübel durch das Einbringen der Spreizschraube auch planmäßig im Bohrloch aufspreizt und verankert, da die Spreizschraube nicht am Bohrlochgrund anstoßen kann. Nach dem Einbringen des Spreizdübels in das Bohrloch kann somit durch den folgenden Schritt, nämlich dem Aufspreizen und Verankern des Spreizdübels mit der Spreizschraube, das Anbauteil am Verankerungsgrund planmäßig befestigt werden.

Vorzugsweise weist der Spreizdübel an seinem hinteren Ende einen Kragen auf, dessen Durchmesser größer als der Bohrlochdurchmesser ist und der am Anbauteil anliegt. Wird der Spreizdübel in einer Vorsteckmontage verwendet, so liegt der Kragen am Verankerungsgrund im Bereich des Bohrlochmundes an und verhindert, dass der Spreizdübel beim Anbringen des Anbauteils beziehungsweise beim Einführen der Spreizschraube in den Spreizdübel versehentlich in das Bohrloch hinein bewegt werden kann. In diesem Fall liegt eine dem Verankerungsgrund abgewandelte Außenseite des Kragens an einer dem Verankerungsgrund zugewandten Innenseite des Anbauteils an. Bei einer Durchsteckmontage liegt der Kragen dagegen auf einer dem Verankerungsgrund abgewandten Außenseite des Anbauteils an, was bei Langschaftdübeln üblich und für die Erfindung bevorzugt ist. "Anliegen" umfasst hier ein direktes Anliegen, bei dem die beiden Teile direkten Kontakt aufweisen, oder ein indirektes Anliegen, bei dem noch ein weiteres Teil, beispielsweise eine thermisch isolierende oder vor Korrosion schützende Trennschicht zwischen den beiden Teilen angeordnet ist.

Vorzugsweise wird das in Einbringrichtung vordere Ende des Spreizdübels durch einen Abstandhalter gebildet. Der Abstandhalter ist ein Bereich des Spreizdübels, der in Einbringrichtung vor dem die Verankerungskraft im Bohrloch erzeugenden Spreizbereich des Spreizdübels angeordnet ist und der nicht zur Verankerung im Bohrloch beiträgt. Insbesondere wird der Abstandhalter beim Aufspreizen von der Spreizschraube nicht aktiv radial zur Einbringrichtung nach außen bewegt und insbesondere nicht mit der Spreizschraube gegen die Bohrlochwand gepresst. Der Abstandhalter ist kein Teil des Spreizbereichs des Spreizdübels und trägt bei planmäßiger Verankerung nicht oder nur unwesentlich zur Verankerung im Bohrloch bei. Der Spreizbereich überträgt mindestens 90 %, insbesondere mindestens 95 % der zwischen Spreizdübel und Bohrlochwand übertragenen Haltekraft. Anders ausgedrückt, bewirkt das Aufspreizen des Spreizbereichs nicht, dass der Abstandhalter gegen die Bohrlochwand gepresst wird und zu einen relevanten Anteil zur Verankerung beiträgt.

Herkömmliche, aus dem Stand der Technik bekannte Spreizdübel weisen einen Spreizbereich auf, der sich regelmäßig bis zum vorderen Ende des Spreizdübels erstreckt, wobei der Spreizbereich regelmäßig im Bereich der Dübelspitze ein insbesondere konischer Einführbereich mit einer Einführschräge aufweist, der das Einführen des Spreizdübels in das Bohrloch erleichtert.

Der Einführbereich erstreckt sich regelmäßig über den gesamten Umfang des Spreizdübels, ist in axialer Richtung kurz gehalten und weist eine Länge von ein bis maximal 3 bis 5 Millimetern auf.

Bei einer bevorzugten Ausgestaltungsform des Befestigungssystems der erfindungsgemäßen Befestigungsanordnung steht das vordere Ende der Spreizschraube nach vorne über den Spreizbereich des Spreizdübels über, insbesondere mit einer konisch zulaufenden Spitze und/oder insbesondere mit einer Länge, die dem Nenndurchmesser der Spreizschraube entspricht. Der Nenndurchmesser der Spreizschraube entspricht im Wesentlichen dem auf Millimeter gerundeten Durchmesser eines Gewindeabschnitts der Spreizschraube, der sich an die Schraubenspitze anschließt und ein Außengewinde und einen im wesentlichen zylindrischen Kern aufweist. Der Spreizbereich des Spreizdübels ist somit insbesondere der Bereich, in dem zumindest dieser Gewindeabschnitt der Schraube liegt.

Vorzugsweise ist der Abstandhalter derart am Spreizdübel angeordnet, dass die Spreizschraube das hintere Ende des Abstandhalters in Einbringrichtung nach vorne überragt. Dagegen überragt der Abstandhalter das vordere Ende der Spreizschraube nach vorne.

Insbesondere steht die Spreizschraube nicht am Abstandhalter an.

Der erfindungsgemäße Spreizdübel ist insbesondere für eine Durchsteckmontage vorgesehen und weist eine Länge auf, die größer als die Länge des Schraubenschafts vom vorderen Ende der Spreizschraube bis zum vorderen Ende des Schraubenkopfs ist.

Vorzugsweise ist die axiale Länge des Abstandhalters mindestens so groß wie der Nenndurchmesser der Spreizschraube. Insbesondere beträgt die axiale Länge des Abstandhalters mindestens 6 Millimeter, insbesondere mindestens 7 Millimeter. Insbesondere ist die axiale Länge des Abstandhalters mindestens so groß wie der Nenndurchmesser des Spreizdübels. Insbesondere beträgt die axiale Länge des Abstandhalters mindestens 8 Millimeter, insbesondere mindestens 10 Millimeter.

Bei einer bevorzugten Ausgestaltungsform der erfindungsgemäßen Befestigungsanordnung beträgt ein Nenndurchmesser des Bohrlochs, der dem Nenndurchmesser des Spreizdübels entspricht, 10 Millimeter und die Dübelspitze steht über die Schraubenspitze der Spreizschraube mindestens 3 Millimeter, insbesondere mindestens 4 Millimeter über.

Insbesondere ist der Abstandhalter im Vergleich zum Spreizbereich des Spreizdübels im Durchmesser reduziert. Der Abstandhalter weist insbesondere keinen kreisförmigen Querschnitt auf. Insbesondere ist der Abstandhalter als U-förmiger Bügel ausgestaltet, dessen Joch das vordere Ende des Spreizdübels bildet.

Bei einem erfindungsgemäßen Spreizdübel ist daher die Dübelspitze als U-förmiger Bügel ausgebildet, dessen Joch das vordere Ende des Spreizdübels bildet. Vorzugsweise ist die axiale Länge des Bügels mindestens so groß wie der Nenndurchmesser der Spreizschraube, insbesondere mindestens 6 Millimeter, insbesondere mindestens 7 Millimeter. Vorzugsweise ist die axiale Länge des Bügels mindestens so groß wie der Nenndurchmesser des Spreizdübels, insbesondere mindestens 8 Millimeter, insbesondere mindestens 10 Millimeter.

Der erfindungsgemäße Spreizdübel ist insbesondere Bestandteil eines Befestigungssystems, das eine dem Spreizdübel zugeordnete Spreizschraube umfasst und dessen Verwendung in einem dem Befestigungssystem zugeordneten Zulassungsdokument geregelt ist.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von zwei in den Figuren dargestellten Ausführungsbeispielen näher erläutert.

Es zeigen:
- Figur 1: den oben beschriebenen fischer SXRL gemäß Anhang A1 der Europäisch Technischen Bewertung ETA-07/0121 vom 20. Dezember 2022;
- Figur 2: eine erste erfindungsgemäße Befestigungsanordnung mit einem erfindungsgemäßen Spreizdübel in einem Bohrloch, das die Mindestsetztiefe aufweist; und
- Figur 3: der erfindungsgemäße Spreizdübel, in den die Spreizschraube eingeschraubt ist, außerhalb eines Bohrlochs in einer perspektivischen Ansicht; und
- Figur 4: eine zweite erfindungsgemäße Befestigungsanordnung mit einem Bohrloch, das eine Bohrlochtiefe aufweist, die größer als die Mindestsetztiefe ist

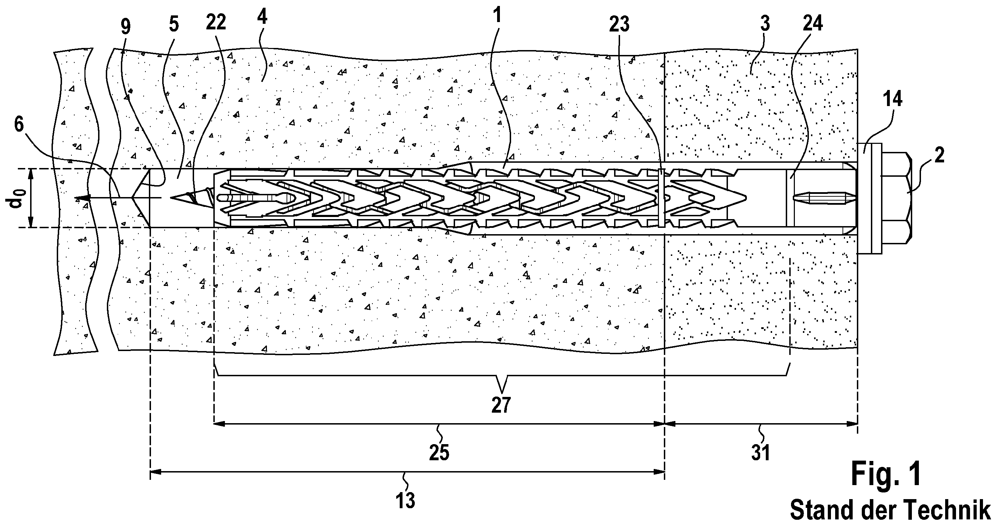

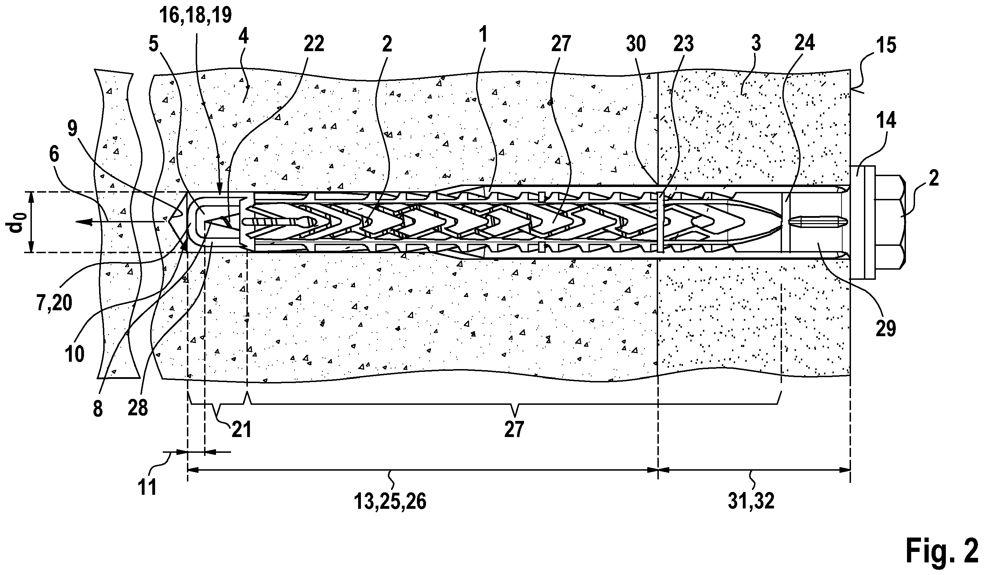

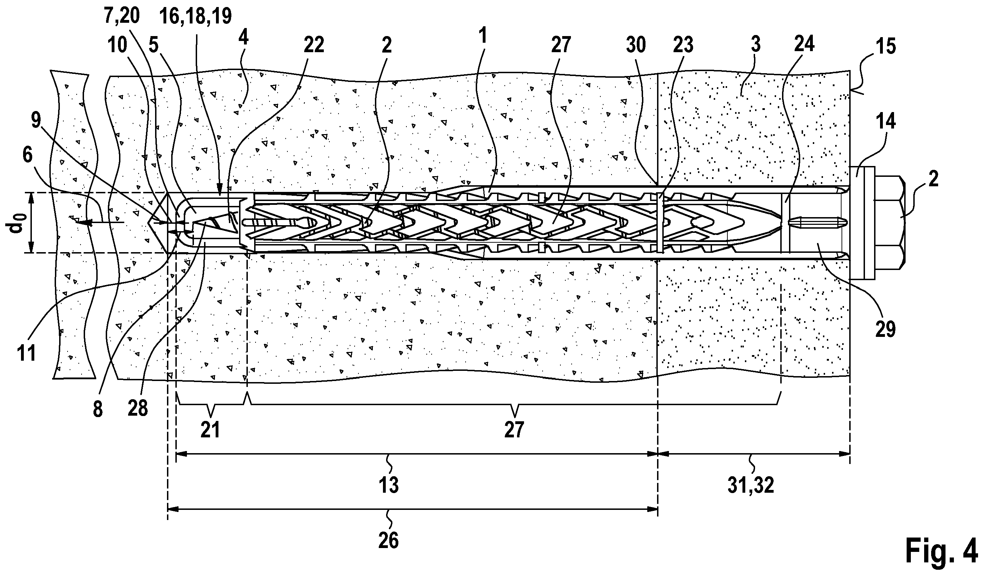

Die in Figur 1 dargestellte Befestigungsanordnung mit dem bekannten Spreizdübel 1 fischer SXRL wurde eingangs beschrieben und als Stand der Technik gewürdigt. Dagegen zeigen die Figuren 2 und 4 zwei erfindungsgemäße Befestigungsanordnungen mit einem erfindungsgemäßen Spreizdübel 1.

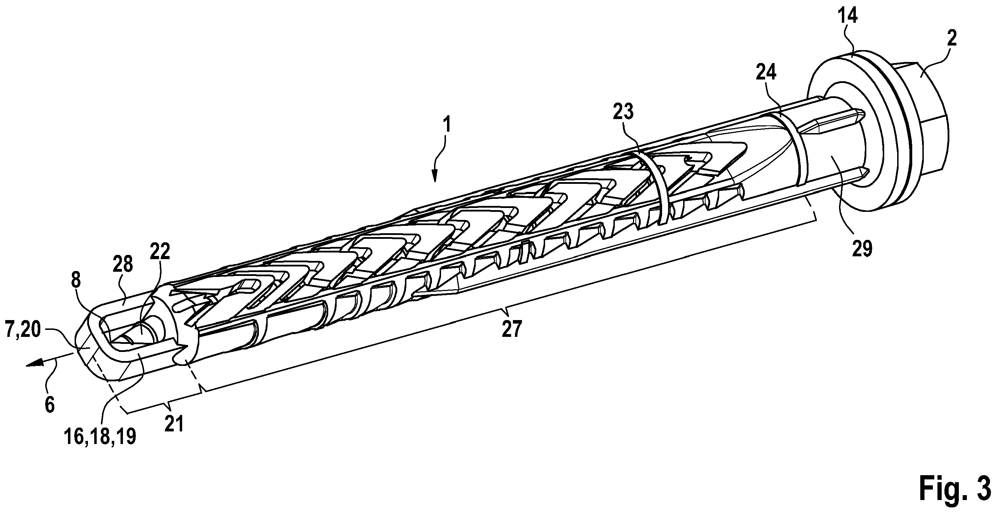

In Figur 2 ist der erfindungsgemäße Spreizdübel 1, der in Figur 3 perspektivisch dargestellt ist, als Bestandteil einer Befestigungsanordnung zu sehen, die neben dem erfindungsgemäßen Spreizdübel 1 eine Spreizschraube 2, ein Anbauteil 3 und einen Verankerungsgrund 4 umfasst. Das Anbauteil 3 ist eine Rahmenkonstruktion aus Holz, die mittels des Spreizdübels 1 und der Spreizschraube 2 am Verankerungsgrund 4 befestigt ist. Hierzu wurde zunächst ein Bohrloch 5 im Verankerungsgrund 4 erstellt. Bei dem in Figur 2 dargestellten Fall entspricht die Bohrlochtiefe 26 der Mindestbohrlochtiefe 13. Dagegen ist die Bohrlochtiefe 26 bei der in Figur 4 dargestellten zweiten erfindungsgemäßen Befestigungsanordnung, die ansonsten der in Figur 2 dargestellten ersten erfindungsgemäßen Befestigungsanordnung entspricht, größer als die Mindestbohrlochtiefe 13. Das Bohren des Bohrlochs 5 ist im vorliegenden Fall durch das Anbauteil 3 hindurch erfolgt, und der Spreizdübel 1 wurde durch das Anbauteil 3 hindurch im Durchsteckverfahren in das Bohrloch 5 eingebracht und der Spreizdübel 1 durch ein Eindrehen der Spreizschraube 2 in den Spreizdübel 1 in einem Spreizbereich 27 des Spreizdübels 1 aufgespreizt, wodurch der Spreizdübel 1 im Verankerungsgrund 4 verankert und das Anbauteil 3 am Verankerungsgrund 4 befestigt ist.

Der Spreizdübel 1 erstreckt sich von einem durch einen Kragen 14 gebildeten hinteren Ende bis zu einem vorderen Ende 7, das von einem Joch 20 eines U-förmigen Bügels 19 gebildet wird, der sich als Abstandhalter 16 in Einbringrichtung 6 vorne an den Spreizbereich 27 des Spreizdübels 1 anschließt. Der Bügel 19 umfasst neben dem Joch 20 zwei seitliche, nach vorn abstehende Stege 28, die mit ihren hinteren Enden einstückig in den Spreizbereich 27 übergehen. Im Spreizbereich 27 ist bei dem dargestellten Spreizdübel 1 eine erste, ringförmig umlaufende Setztiefenmarkierung 23 angeordnet, hinter der, mit axialem Abstand von zwei Zentimetern, eine zweite Setztiefenmarkierung 24 angeordnet ist. Der Spreizbereich 27, der sich im Durchmesser beim Einbringen der Spreizschraube 2 radial weitet, also aufspreizt, das heißt, durch die Spreizschraube 2 nach außen gegen die Wand des Bohrlochs 5 gepresst wird, sodass Haltekräfte zwischen dem Spreizbereich 27 und der Bohrlochwand übertragen werden können und dadurch den Spreizdübel 1 im Bohrloch 5 verankert, erstreckt sich bis zur zweiten Setztiefenmarkierung 24. Zwischen der zweiten Setztiefenmarkierung 24 und dem Kragen 14 ist ein Hülsenabschnitt 29 angeordnet, der als Hohlzylinder ausgebildet ist, mit einem Innendurchmesser, der etwas größer als der Durchmesser des Außengewindes der Spreizschraube 2 ist. Der Aufbau und die Funktion des Spreizbereichs 27 entspricht im Ausführungsbeispiel dem des bekannten fischer SXRL Langschaftdübels, wobei die spezielle Ausführung des Spreizbereichs hiervon abweichen kann und nicht erfindungsrelevant ist.

Wie in den Figuren 2 und 4 zu sehen ist, wurde der Spreizdübel 1 so weit in das Bohrloch 5 eingebracht, bis sich die erste Setztiefenmarkierung 23 auf der Höhe des Bohrlochmundes 30 befindet. Erfindungsgemäß weist in diesem planmäßigen Verankerungszustand, in dem der Spreizdübel 1 mit der Spreizschraube 2 planmäßig im Bohrloch 5 verankert ist, das in Einbringrichtung 6 vordere Ende 7 des Spreizdübels 1 und das in Einbringrichtung 6 vordere Ende 8 der Spreizschraube 2 jeweils einen Abstand 10, 11 zum Bohrlochgrund 9 auf, der vorliegend kleiner als ein Drittel des Bohrlochdurchmessers ist. In dem in Figur 2 dargestellten Fall ist der Abstand des vorderen Endes 7 des Spreizdübels 1 zum Bohrlochgrund 9 kleiner Null, sie liegt am kegelförmigen Bohrlochgrund 9 an, da die Mindestsetztiefe 25 der Bohrlochtiefe 26 und die Bohrlochtiefe 26 der Mindestbohrlochtiefe 13 entspricht, so das der Spreizdübel 1 mit seinem vorderen Ende 7 am Bohrlochgrund 9 ansteht. Die Mindestsetztiefe 25 entspricht, wie dies in Figur 2 zu sehen ist, der Länge des Spreizdübels 1 im Bohrloch 5 bei planmäßiger Montage, wie sie insbesondere im einem zugeordneten Zulassungsdokument geregelt ist. Aufgrund der Ausbildung des Bügels 19 als Abstandhalter 16 überragt der Spreizdübel 1 die Spreizschraube 2 in Einbringrichtung 6, das heißt, der Abstand 11 des vorderen Endes 8 der Spreizschraube 2 zum Bohrlochgrund 9 ist größer als der Abstand 10 des vorderen Endes 10 des Spreizdübels 1 zum Bohrlochgrund 9.

In Figur 4 dagegen ist die Bohrlochtiefe 26 größer als die planmäßig notwendige Mindestbohrlochtiefe 13, so dass der tatsächliche Abstand des Spreizdübels 1 vom Bohrlochgrund 9 größer ist, als planmäßig erforderlich. Aber auch beim Ausführungsbeispiel der Figur 4 weist das Bohrloch erfindugsgemäß die zugeordnete planmäßige Mindestbohrlochtiefe 13 auf, bei der, wenn das Bohrloch 5 mit dieser Tiefe gebohrt worden wäre, das in Einbringrichtung 6 vordere Ende 7 des Spreizdübels 1 einen Abstand 10 zum Bohrlochgrund 9 aufweisen würde, der kleiner als ein Drittel des Bohrlochdurchmessers 12 wäre, das in Einbringrichtung 6 vordere Ende 8 der Spreizschraube 2 einen Abstand zum planmäßigen Bohrlochgrund aufweisen würde, der kleiner als die Hälfte des Bohrlochdurchmessers 12 wäre, da das planmäßige Bohrloch dem beziehungsweise die Befestigungsanordnung der der Figur 2 entsprechen würde.

Bei den in den Figuren 2 und 4 dargestellten erfindungsgemäßen Befestigungsanordnungen entspricht die Dicke 31 des Anbauteils 3 der möglichen ersten Klemmlänge 32 des Spreizdübels 1 zwischen der ersten Setztiefenmarkierung 23 und dem Kragen 14. Der Kragen 14 liegt somit auf der dem Verankerungsgrund 4 abgewandten Außenseite 15 des Anbauteils 3 an.

Der als U-förmiger Bügel 19 ausgebildete Abstandhalter 16 bildet mit seinem Joch 20 das vordere Ende 7 des Spreizdübels 1. Dieser Teil des Spreizdübels 1 ist kein Teil des Spreizbereichs 27 und trägt bei planmäßiger Verankerung nicht zur Verankerung im Bohrloch 5 bei, da er beim Aufspreizen des Spreizbereichs 27 nicht gegen die Bohrlochwand gepresst wird. Der Bügel 19 ist nach hinten offen, sodass die Schraubenspitze 22 sich im planmäßigen Verankerungszustand zwischen den beiden Stegen 28 befindet und somit das vordere Ende 8 der Spreizschraube 2 hinter dem Joch 20, aber vor den hinteren Enden der Stege 28. In beiden Ausführungsbeispielen weist der Abstandhalter 16 eine axiale Länge 21 in Einbringrichtung 6 auf, die etwas größer als der Nenndurchmesser des Bohrlochs 5 ist. Vorliegend beträgt die Länge 21 des Abstandhalters 16 12 Millimeter, bei einem Nenndurchmesser des Bohrlochs 5 von 10 Millimetern, was dem Nenndurchmesser des Spreizdübels 1 von ebenfalls 10 Millimetern entspricht. Der Nenndurchmesser der Spreizschraube 2 beträgt 7 Millimeter. Da die Schraubenspitze 22 7 Millimeter über den Spreizbereich 27 nach vorne übersteht, steht die Dübelspitze 18 mit ihrem vorderen Ende 5 Millimeter über die Schraubenspitze 22 nach vorne über.

Aufgrund der erfindungsgemäßen Ausbildung kann der Spreizdübel 1 als Lehre zur Bestimmung einer ausreichend Bohrlochtiefe 26 verwendet werden. Wie dies in den Figuren 2 und 4 zu sehen ist, wurde der Spreizdübel 1 so weit in das Bohrloch 5 eingebracht, bis die für den Anwendungsfall maßgebende Setztiefenmarkierung, hier die erste Setztiefenmarkierung 23 anzeigt, dass der Spreizdübel 1 zumindest mit der Mindestsetztiefe 25 in das Bohrloch 5 eingreift. Wie in Figur 2 zu sehen ist, ist die Mindestsetztiefe 25 mindestens so groß, dass der Spreizdübel 1 nach den Einbringen mit seinem in Einbringrichtung 6 vorderen Ende 7 am Bohrlochgrund 9 ansteht, wenn das Bohrloch 5 die Mindestbohrlochtiefe 13 aufweist und nicht tiefer gebohrt ist. Wenn der Spreizdübel 1 mit der Mindestsetztiefe 25 eingebracht werden kann, bedeutet dies, dass die Länge des Spreizdübels 1 größer als die axiale Länge des Schraubenschafts bis zum Schraubenkopf der Spreizschraube 2 ist, und dass die Spreizschraube 2 vollständig in den Spreizdübel 1 eingebracht werden kann, ohne dass sie mit ihrer Schraubenspitze 22 am Bohrlochgrund 9 ansteht. Somit ist gewährleistet, dass der Spreizdübel 1 planmäßig mittels der Spreizschraube 2 aufgespreizt werden kann.

### Bezugszeichenliste

- 1: Spreizdübel
- 2: Spreizschraube
- 3: Anbauteil
- 4: Verankerungsgrund
- 5: Bohrloch
- 6: Einbringrichtung
- 7: vorderes Ende des Spreizdübels 1
- 8: vorderes Ende der Spreizschraube 2
- 9: Bohrlochgrund
- 10: Abstand des Spreizdübels 1 zum Bohrlochgrund 9
- 11: Abstand der Spreizschraube 2 zum Bohrlochgrund 9
- 12: Bohrlochdurchmesser
- 13: Mindestbohrlochtiefe
- 14: Kragen
- 15: Außenseite des Anbauteils 3
- 16: Abstandhalter
- 17: hinteres Ende des Abstandhalters 16
- 18: Dübelspitze
- 19: Bügel
- 20: Joch
- 21: axiale Länge des Abstandhalters 16
- 22: Schraubenspitze
- 23: erste Setztiefenmarkierung
- 24: zweite Setztiefenmarkierung
- 25: Mindestsetztiefe
- 26: Bohrlochtiefe
- 27: Spreizbereich
- 28: Steg
- 29: Hülsenabschnitt
- 30: Bohrlochmund
- 31: Dicke des Anbauteils 3
- 32: erste Klemmlänge

## Patentansprüche

1. Verfahren zur Herstellung einer Befestigungsanordnung mit einem Spreizdübel (1), einer Spreizschraube (2), einem Anbauteil (3) und einem Verankerungsgrund (4), wobei das Anbauteil (3) mittels des Spreizdübels (1) und der Spreizschraube (2) am Verankerungsgrund (4) befestigt wird, wobei der Spreizdübel (1) in einem Bohrloch (5) im Verankerungsgrund (4) durch die Spreizschraube (2) verspreizt und dadurch verankert wird,
mit den Schritten:
- Bohren des Bohrlochs (5) in dem Verankerungsgrund (4), wobei zumindest eine Mindestbohrlochtiefe (13) erreicht wird,
- Einbringen des Spreizdübels (1) in das Bohrloch (5),
**dadurch gekennzeichnet,**
**dass** der Spreizdübel (1) als Lehre zur Bestimmung einer ausreichenden Bohrlochtiefe (26) verwendet wird, derart dass der Spreizdübel (1) so weit in das Bohrloch (5) eingebracht wird, bis eine Setztiefenmarkierung (23) am Spreizdübel (1) anzeigt, dass der Spreizdübel (1) zumindest über eine Mindestsetztiefe (25) in das Bohrloch (5) eingreift, wobei die Mindestsetztiefe (25) so groß ist, dass der Spreizdübel (1) nach dem Einbringen mit seinem in Einbringrichtung (6) vorderen Ende (7) am Bohrlochgrund (9) ansteht, wenn das Bohrloch (5) genau die Mindestbohrlochtiefe (13) aufweist.

2. Verfahren nach Anspruch 1 mit dem nach dem Einbringen des Spreizdübels (1) in das Bohrloch (5) folgenden Schritt: Aufspreizen und Verankern des Spreizdübels (1) mit der Spreizschraube (2) und Befestigen des Anbauteils (3) am Verankerungsgrund (4).

3. Verfahren nach einem der vorstehenden Ansprüche, **dadurch gekennzeichnet, dass** das in Einbringrichtung (6) vordere Ende (7) des Spreizdübels (1) durch einen Abstandhalter (16) gebildet wird, der nicht zur Verankerung im Bohrloch (5) beiträgt.

4. Verfahren nach einem der vorstehenden Ansprüche, **dadurch gekennzeichnet, dass** eine Dübelspitze (18) des Spreizdübels (1) als U-förmiger Bügel (19) als Abstandhalter (16) ausgebildet ist, dessen Joch (20) das vordere Ende (7) des Spreizdübels (1) bildet.

5. Verfahren nach Anspruch 3 oder Anspruch 4, **dadurch gekennzeichnet, dass** die Spreizschraube (2) das hintere Ende des Abstandhalters (16) in Einbringrichtung (6) nach vorne überragt.

6. Verfahren nach einem der Ansprüche 3 bis 5, **dadurch gekennzeichnet, dass** die axiale Länge (21) des Abstandhalters (16) mindestens so groß wie der Nenndurchmesser der Spreizschraube (2) ist, insbesondere mindestens 6 Millimeter.

7. Verfahren nach einem der Ansprüche 3 bis 6, **dadurch gekennzeichnet, dass** die axiale Länge (21) des Abstandhalters (16) mindestens so groß wie der Nenndurchmesser des Spreizdübels (1) ist, insbesondere mindestens 10 Millimeter.

8. Verfahren nach einem der vorstehenden Ansprüche, **dadurch gekennzeichnet, dass** ein Nenndurchmesser des Bohrlochs (5) 10 Millimeter beträgt und dass die Dübelspitze (18) mindestens 3 Millimeter, insbesondere mindestens 4 Millimeter über eine Schraubenspitze (22) der Spreizschraube (2) übersteht.

9. Verfahren nach einem der vorstehenden Ansprüche, **dadurch gekennzeichnet, dass** das Bohrloch (5) eine dem Spreizdübel (1) zugeordnete planmäßige Mindestbohrlochtiefe (13) aufweist, die der Mindestsetztiefe (25) des Spreizdübels (1) im Bohrloch (5) bei planmäßiger Montage entspricht.

10. Verfahren nach einem der vorstehenden Ansprüche, **dadurch gekennzeichnet, dass** der Spreizdübel (1) mit seinem vorderen Ende (7) am Bohrlochgrund (9) ansteht.

11. Verfahren nach einem der vorstehenden Ansprüche, **dadurch gekennzeichnet, dass** der Spreizdübel (1) an seinem hinteren Ende einen Kragen (14) aufweist, dessen Durchmesser größer als der Bohrlochdurchmesser (12) ist und der am Anbauteil (3) anliegt.

12. Verfahren nach Anspruch 11, **dadurch gekennzeichnet, dass** der Kragen (14) auf einer dem Verankerungsgrund (4) abgewandten Außenseite (15) des Anbauteils (3) anliegt.

## Claims

1. A method for producing a fastening arrangement comprising an expansion dowel (1), an expansion screw (2), an attachment part (3) and an anchoring base (4), wherein the attachment part (3) is secured to the anchoring base (4) by means of the expansion dowel (1) and the expansion screw (2), wherein the expansion dowel (1) is expanded in a borehole (5) in the anchoring base (4) by the expansion screw (2) and is thereby anchored,
comprising the steps:
- drilling the borehole (5) in the anchoring base (4), whereby at least a minimum borehole depth (13) is reached,
- inserting the expansion dowel (1) into the borehole (5),
**characterized in that,**
the expansion dowel (1) is used as a gauge for determining a sufficient borehole depth (26), such that the expansion dowel (1) is inserted into the borehole (5) until a setting depth mark (23) on the expansion dowel (1) indicates that the expansion dowel (1) engages with the borehole (5) to at least a minimum setting depth (25), whereby the minimum setting depth (25) is such that the expansion dowel (1), after insertion, abuts the bottom of the borehole (9) with its front end (7), as viewed in the insertion direction (6), when the borehole (5) has exactly the minimum borehole depth (13).

2. A method according to claim 1, comprising the following step after the expansion dowel (1) has been inserted into the borehole (5): expanding and anchoring the expansion dowel (1) using the expansion screw (2) and securing the attachment part (3) to the anchoring base (4).

3. A method according to one of the preceding claims, **characterized in that** the front end (7) of the expansion dowel (1) in the insertion direction (6) is formed by a spacer (16) which does not contribute to anchoring in the borehole (5).

4. A method according to one of the preceding claims, **characterized in that** a dowel tip (18) of the expansion dowel (1) is designed as a U-shaped bracket (19) which acts as a spacer (16), the yoke (20) of which forms the front end (7) of the expansion dowel (1).

5. A method according to claim 3 or claim 4, **characterized in that** the expansion screw (2) protrudes forwards beyond the rear end of the spacer (16) in the insertion direction (6).

6. A method according to any one of claims 3 to 5, **characterized in that** the axial length (21) of the spacer (16) is at least as great as the nominal diameter of the expansion screw (2), in particular at least 6 millimetres.

7. A method according to any one of claims 3 to 6, **characterized in that** the axial length (21) of the spacer (16) is at least as great as the nominal diameter of the expansion dowel (1), in particular at least 10 millimetres.

8. A method according to one of the preceding claims, **characterized in that** the nominal diameter of the borehole (5) is 10 millimetres and that the dowel tip (18) protrudes at least 3 millimetres, in particular at least 4 millimetres, beyond a screw tip (22) of the expansion screw (2).

9. A method according to one of the preceding claims, **characterized in that** the borehole (5) has a specified minimum borehole depth (13) associated with the expansion dowel (1), which corresponds to the minimum setting depth (25) of the expansion dowel (1) in the borehole (5) during standard installation.

10. A method according to one of the preceding claims, **characterized in that** the expansion dowel (1) abuts the bottom (9) of the borehole with its front end (7).

11. A method according to one of the preceding claims, **characterized in that** the expansion dowel (1) has, at its rear end, a collar (14) whose diameter is greater than the borehole diameter (12) and which abuts against the attachment part (3).

12. A method according to claim 11, **characterized in that** the collar (14) rests against an outer side (15) of the attachment part (3) facing away from the anchoring base (4).

## Revendications

1. Procédé de fabrication d'un dispositif de fixation comprenant une cheville à expansion (1), une vis d'expansion (2), une pièce rapportée (3) et une base d'ancrage (4), dans lequel la pièce rapportée (3) est fixée à la base d'ancrage (4) à l'aide de la cheville à expansion (1) et de la vis d'expansion (2), la cheville à expansion (1) étant écartée dans un trou de perçage (5) pratiqué dans la base d'ancrage (4) par la vis d'expansion (2) et ainsi ancrée,
comprenant les étapes suivantes:
- perçage du trou de perçage (5) dans la base d'ancrage (4), une profondeur minimale du trou de perçage (13) étant atteinte,
- insertion de la cheville à expansion (1) dans le trou de perçage (5),
**caractérisé en ce que,**
la cheville à expansion (1) est utilisée comme gabarit pour déterminer la profondeur suffisante du trou de perçage (26), de telle sorte que la cheville à expansion (1) soit introduite dans le trou de perçage (5) jusqu'à ce qu'un repère de profondeur de pose (23) sur la cheville à expansion (1) indique que la cheville à expansion (1) s'engage dans le trou de perçage (5) au moins sur une profondeur de pose minimale (25), la profondeur de pose minimale (25) étant suffisante pour que la cheville à expansion (1), une fois insérée, repose par son extrémité avant (7) - dans la direction d'introduction (6) - contre le fond du trou de perçage (9) lorsque le trou de perçage (5) présente exactement la profondeur minimale du trou de perçage (13).

2. Procédé selon la revendication 1, comprenant l'étape suivante après l'insertion de la cheville à expansion (1) dans le trou de perçage (5): expansion et ancrage de la cheville à expansion (1) à l'aide de la vis d'expansion (2) et fixation de la pièce rapportée (3) à la base d'ancrage (4).

3. Procédé selon l'une des revendications précédentes, **caractérisé en ce que** l'extrémité avant (7) de la cheville à expansion (1), dans la direction d'introduction (6), est formée par une entretoise (16) qui ne contribue pas à l'ancrage dans le trou de perçage (5).

4. Procédé selon l'une des revendications précédentes, **caractérisé en ce que** la pointe (18) de la cheville à expansion (1) est réalisée sous la forme d'un étrier (19) en U servant d'entretoise (16), dont la traverse (20) forme l'extrémité avant (7) de la cheville à expansion (1).

5. Procédé selon la revendication 3 ou la revendication 4, **caractérisé en ce que** la vis d'expansion (2) dépasse vers l'avant de l'extrémité arrière de l'entretoise (16) dans la direction d'introduction (6).

6. Procédé selon l'une des revendications 3 à 5, **caractérisé en ce que** la longueur axiale (21) de l'entretoise (16) est au moins aussi grande que le diamètre nominal de la vis d'expansion (2), en particulier au moins 6 millimètres.

7. Procédé selon l'une des revendications 3 à 6, **caractérisé en ce que** la longueur axiale (21) de l'entretoise (16) est au moins aussi grande que le diamètre nominal de la cheville à expansion (1), en particulier au moins 10 millimètres.

8. Procédé selon l'une des revendications précédentes, **caractérisé en ce que** le diamètre nominal du trou de perçage (5) est de 10 millimètres et **en ce que** la pointe (18) de la cheville à expansion (1) dépasse d'au moins 3 millimètres, en particulier d'au moins 4 millimètres, au-delà d'une pointe de la vis (22) de la vis d'expansion (2).

9. Procédé selon l'une des revendications précédentes, **caractérisé en ce que** le trou de perçage (5) présente une profondeur minimale du trou de perçage (13) associée à la cheville à expansion (1), qui correspond à la profondeur de pose minimale (25) de la cheville à expansion (1) dans le trou de perçage (5) lors d'un montage conforme aux spécifications.

10. Procédé selon l'une des revendications précédentes, **caractérisé en ce que** la cheville à expansion (1) repose par son extrémité avant (7) au fond du trou de perçage (9).

11. Procédé selon l'une des revendications précédentes, **caractérisé en ce que** la cheville à expansion (1) comporte, à son extrémité arrière, une collerette (14) dont le diamètre est supérieur au diamètre du trou de perçage (12) et qui repose contre la pièce rapportée (3).

12. Procédé selon la revendication 11, **caractérisé en ce que** la collerette (14) repose contre une face extérieure (15) de la pièce rapportée (3) qui est opposée à la base d'ancrage (4).
